# EUROPÄISCHE PATENTSCHRIFT

(11) **EP 2 760 916 B1**
(45) Veröffentlichungstag und Bekanntmachung des Hinweises auf die Patenterteilung: **25.11.2015**
(21) Anmeldenummer: 12758852.3
(22) Anmeldetag: 12.09.2012
(51) Int. Cl.: C08G 75/23, C08L 81/06, C08L 67/00

(54) **HOCHFESTE BLENDS AUF BASIS VON POLYARYLENETHERN**
HIGH-STRENGTH BLENDS BASED ON POLYARYLENE ETHERS
BLENDS À HAUTE RÉSISTANCE À BASE D'ÉTHERS POLYARYLÉNIQUES

(30) Priorität: 30.09.2011 EP 11183488
(43) Veröffentlichungstag der Anmeldung: 06.08.2014
(73) Patentinhaber: BASF SE, 67056 Ludwigshafen (DE)
(72) Erfinder: WEBER, Martin, 67487 Maikammer (DE); MALETZKO, Christian, 67122 Altrip (DE); HENNENBERGER, Florian, 64646 Heppenheim (DE)
(86) Internationale Anmeldenummer: PCT/EP2012/067778
(87) Internationale Veröffentlichungsnummer: WO 2013/045268

(56) Entgegenhaltungen:
- DE-A1- 19 961 040
- US-A1- 2011 210 290

## Beschreibung

Die vorliegende Erfindung betrifft Formmassen umfassend
(A) von 29 bis 89 Gew.-% mindestens eines Polyarylenethersulfons mit einer mittleren Anzahl an phenolischen Endgruppen pro Kette von 0 bis 0,2,
(B) von 0,5 bis 20 Gew.-% eines thermotropen Polymers
(C) von 0,5 bis 10 Gew.% eines Polyarylenethers mit überwiegend OH-Endgruppen
(D) von 10 bis 70 Gew.% mindestens eines faser- oder teilchenförmigen Füllstoffs
(E) von 0 bis 40 Gew.-% Zusatzstoffen oder Verarbeitungshilfsmittel,
wobei die Summe der Gewichtsanteile 100 Gew.-% bezogen auf die thermoplastische Formmasse ergibt.

Polyarylenether gehören zur Gruppe der Hochleistungsthermoplaste. Als amorphe Thermoplaste sind Polyarylenether bis nahe an ihre Glastemperatur kurzzeitig mechanisch belastbar. Nachteilig ist die zum Teil geringe Beständigkeit gegenüber aggressiven Medien. Weiterhin weisen Polyarylenether auch hohe Schmelzeviskosität auf, was besonders die Verarbeitung zu großen Formteilen mittels Spritzguss beeinträchtigt. Die hohe Schmelzeviskosität ist auch nachteilig bei der Herstellung von Formmassen mit hoher Füllstoff- oder Faserbeladung.

Dem Fachmann ist bekannt, dass die Fließfähigkeit von Polyarylenethern durch Zugabe von LC-Polymeren beeinflusst werden kann. Allerdings weisen solche Formmassen wegen der fehlenden Phasenhaftung niedrige Reißdehnungswerte auf.

Es sind Ansätze bekannt, nach denen die Haftung zwischen der Polymermatrix und dem LC-Polymeren verbessert wird, indem anhydridmodifizierte Polymere als dritte Komponente verwendet werden, um eine Anbindung zwischen der jeweiligen Polymermatrix und den LC-Polymeren zu erreichen (Datta, A. et. al., Polymer 1993, 34, p. 759, Baird, D.G. et. al., Polymer 1999, 40, p. 701).

Zur Kompatibilisierung von Polysulfon mit LC-Polymeren wurde die Verwendung von PSU gepfropft mit Maleinsäureanhydrid bechrieben (He, J. et. al., Polymer 2002, 43, p. 1437).

Aus der DE 19961040 ist die Verwendung von LC-Polymeren in verstärkten Formmassen aus Polyethersulfon und Polyamid bekannt.

Aufgabe der vorliegenden Erfindung war es, hochfeste thermoplastische Formmassen auf Basis von Polyethersulfonen zur Verfügung zu stellen. Hierbei sollten insbesondere Formmassen mit einer guten Verarbeitbarkeit in der Schmelze bei gleichzeitiger hoher mechanischer Belastbarkeit zur Verfügung gestellt werden.

Einerseits sollten die Formmassen noch bei hohen Temperaturen eine hohe Steifigkeit aufweisen. Andererseits sollten die Formmassen auch eine gute Fließfähigkeit aufweisen.

Die Aufgabe wird gelöst durch eingangs beschriebene Formmasse.

Erfindungsgemäß enthält die thermoplastische Formmasse mindestens einen oder mehrere, vorzugsweise aber ein Polyarylenethersulfon (A) mit im Mittel höchstens 0,2 phenolischen Endgruppen pro Polymerkette. Der Ausdruck "im Mittel" bedeutet dabei ein Zahlenmittel.

Komponente A) liegt in den erfindungsgemäßen thermoplastischen Formmassen vorzugsweise in Mengen von 29 bis 89 Gew.-%, besonders bevorzugt von 35 bis 80 Gew.-%, insbesondere von 40 bis 75 Gew.-%, ganz besonders bevorzugt von 50 bis 60 Gew.-% vor, wobei die Summe der Gewichtsanteile der Komponenten A) bis G) 100 Gew.-% bezogen auf die Formmasse ergibt.

Es ist für den Fachmann offensichtlich, dass die phenolischen Endgruppen reaktiv sind und in den thermoplastischen Formmassen in mindestens teilweise umgesetzter Form vorliegen können. Die thermoplastischen Formmassen werden vorzugsweise durch Compoundierung, d. h. durch Vermischen der Komponenten in einem fließfähigen Zustand hergestellt.

Unter phenolischer Endgruppe wird im Rahmen der vorliegenden Erfindung eine Hydroxygruppe verstanden, die an einen aromatischen Kern gebunden ist und die gegebenenfalls auch deprotoniert vorliegen kann. Es ist dem Fachmann bekannt, dass eine phenolische Endgruppe durch Abspaltung eines Protons infolge Einwirkung einer Base auch als sogenannte Phenolatendgruppe vorliegen kann. Der Begriff phenolische Endgruppen umfasst somit ausdrücklich sowohl aromatische OH- als auch Phenolatgruppen.

Die Bestimmung des Anteils der phenolischen Endgruppen erfolgt vorzugsweise durch potentiometrische Titration. Hierfür wird das Polymer in Dimethylformamid gelöst und mit einer Lösung von Tetrabutylammoniumhydroxid in Toluol/Methanol titriert. Die Endpunktserfassung erfolgt potentiometrisch. Die Bestimmung des Anteils an Halogenendgruppen erfolgt vorzugsweise mittels Atomspektroskopie.

Aus dem Gewichtsanteil phenolischer Endgruppen bezogen auf das Gesamtgewicht des Polymers (m^{OH}) und dem zahlenmittleren Molekulargewicht (Mₙ^{P}) kann der Fachmann nach bekannten Methoden die mittlere Zahl an phenolischen Endgruppen pro Polymerkette (n^{OH}) unter der Annahme strikt linearer Polymerketten nach folgender Formel ermitteln: n^{OH} = m^{OH} [in Gew.-%] /100 * Mₙ^{P} [in g/mol] * 1/17.

Alternativ kann die mittlere Zahl von phenolischen Endgruppen pro Polymerkette (n^{OH}) unter Voraussetzung strikt linearer Polymerketten bei gleichzeitiger Kenntnis des Gewichtsanteils an CI-Endgruppen (m^{Cl}) unter der Annahme, dass ausschließlich OH- und CI-Endgruppen vorliegen, wie folgt berechnet werden: n^{OH} = 2 / ( 1 + (17/35,45 * m^{Cl} / m^{OH} )). Dem Fachmann ist bekannt, wie die Berechnungsweisen im Fall anderer Endgruppen als Cl anzupassen sind.

Die Herstellung von Polyarylenethersulfonen bei gleichzeitiger Steuerung der Endgruppen ist dem Fachmann bekannt und wird weiter unten näher beschrieben. Die bekannten Polyarylenether weisen üblicherweise Halogen-, insbesondere -F oder -Cl, oder phenolische OH- bzw. Phenolat-Endgruppen auf, wobei letztere als solche oder in umgesetzter Form, insbesondere in Form von -OCH₃-Endgruppen, vorliegen können.

Vorzugsweise weisen die Polyarylenethersulfone (A) höchstens 0,01 Gew.-%, besonders bevorzugt höchstens 0,005 Gew.-% phenolische Endgruppen bezogen auf die Gewichtsmenge der Komponente (A) auf.

Die jeweilige Obergrenze für den Gehalt phenolischer Endgruppen in den Komponenten (A) ergibt sich aus der Zahl der zur Verfügung stehenden Endgruppen pro Molekül (zwei im Fall linearer Polyarylenether) und der zahlenmittleren Kettenlänge. Entsprechende Berechnungen sind dem Fachmann bekannt.

Vorzugsweise beträgt die mittlere Anzahl der phenolischen Endgruppen der Komponente (A) pro Polymerkette von 0 bis 0,2, insbesondere von 0 bis 0,1, besonders bevorzugt von 0 bis 0,05, ganz besonders bevorzugt von 0 bis 0,02, insbesondere bevorzugt höchstens 0,01.

Polyarylenether sind dem Fachmann als Polymerklasse bekannt. Im Prinzip kommen alle dem Fachmann bekannten und/oder nach bekannten Methoden herstellbaren Polyarylenether als Komponente (A) in Betracht. Entsprechende Methoden werden weiter unten erläutert.

Bevorzugte Polyarylenethersulfone (A) sind aus Bausteinen der allgemeinen Formel I aufgebaut: 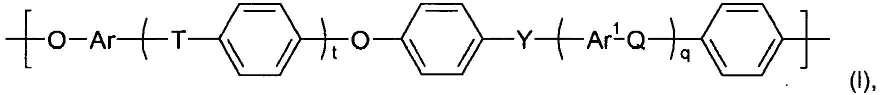 wobei die Symbole t, q, Q, T, Y, Ar und Ar¹ folgende Bedeutungen aufweisen:
- t, q:: unabhängig voneinander 0, 1, 2 oder 3,
- Q, T, Y:: unabhängig voneinander jeweils eine chemische Bindung oder Gruppe, ausgewählt aus -O-, -S-, -SO₂-, S=O, C=O, -N=N- und -CRₐR^{b}-, wobei R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe stehen, und wobei wenigstens eines aus Q, T und Y für -SO₂- steht und
- Ar, Ar¹:: unabhängig voneinander eine Arylengruppe mit von 6 bis 18 Kohlenstoffatomen.

Falls Q, T oder Y unter den oben genannten Voraussetzungen eine chemischen Bindung ist, dann ist darunter zu verstehen, dass die links benachbarte und die rechts benachbarte Gruppe direkt miteinander über eine chemische Bindung verknüpft vorliegen.

Vorzugsweise werden Q, T und Y in Formel I allerdings unabhängig voneinander ausgewählt aus -O- und -SO₂-, mit der Maßgabe, dass wenigstens eines aus der Gruppe bestehend aus Q, T und Y für -SO₂- steht.

Sofern Q, T oder Y -CR^{a}R^{b}- sind, stehen R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe.

Bevorzugte C₁-C₁₂-Alkylgruppen umfassen lineare und verzweigte, gesättigte Alkylgruppen mit von 1 bis 12 Kohlenstoffatomen. Insbesondere sind folgende Reste zu nennen: C₁-C₆-Alkylrest, wie Methyl, Ethyl, n-Propyl, i-Propyl, n-Butyl, sek-Butyl, 2-oder 3-Methyl-pentyl und längerkettige Reste wie unverzweigtes Heptyl, Octyl, Nonyl, Decyl, Undecyl, Lauryl und die ein- oder mehrfach verzweigten Analoga davon.

Als Alkylreste in den vorgenannten einsetzbaren C₁-C₁₂-Alkoxygruppen kommen die weiter oben definierten Alkylgruppen mit von 1 bis 12 Kohlenstoffatomen in Betracht. Vorzugsweise verwendbare Cycloalkylreste umfassen insbesondere C₃-C₁₂-Cyclo-alkylreste, wie zum Beispiel Cyclopropyl, Cyclobutyl, Cyclopentyl, Cyclohexyl, Cyclo-heptyl, Cyclooctyl, Cyclopropylmethyl, Cyclopropylethyl, Cyclopropylpropyl, Cyclo-butylmethyl, Cyclobutylethyl, Cyclpentylethyl, -propyl, -butyl, -pentyl, -hexyl, Cyclohexylmethyl, -dimethyl, und -trimethyl.

Ar und Ar¹ bedeuten unabhängig voneinander eine C₆-C₁₈-Arylengruppe. Ausgehend von den weiter unten beschriebenen Ausgangsprodukten ist Ar vorzugsweise abgeleitet von einer elektronenreichen, leicht elektrophil angreifbaren aromatischen Substanz, die bevorzugt aus der Gruppe bestehend aus Hydrochinon, Resorcin, Dihydroxynaphthalin, insbesondere 2,7-Dihydroxynaphthalin, und 4,4'-Bisphenol ausgewählt wird. Vorzugsweise ist Ar¹ eine unsubstituierte C₆- oder C₁₂-Arylengruppe.

Als C₆-C₁₈-Arylengruppen Ar und Ar¹ kommen insbesondere Phenylengruppen, wie 1,2-, 1,3- und 1,4-Phenylen, Naphthylengruppen, wie beispielsweise 1,6-, 1,7-, 2,6-und 2,7-Naphthylen, sowie die von Anthracen, Phenanthren und Naphthacen abgeleiteten Arylengruppen in Betracht.

Vorzugsweise werden Ar und Ar¹ in der bevorzugten Ausführungsform gemäß Formel I unabhängig voneinander ausgewählt aus der Gruppe bestehend aus 1,4-Phenylen, 1,3-Phenylen, Naphthylen, insbesondere 2,7-Dihydroxynaphthylen, und 4,4'-Bisphenylen.

Bevorzugte Polyarylenethersulfone (A) sind solche, die mindestens eine der folgenden Bausteine la bis Io als wiederkehrende Struktureinheiten enthalten:

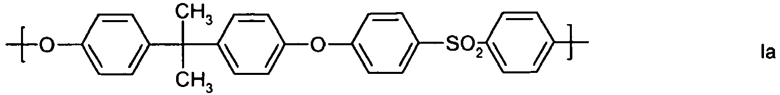

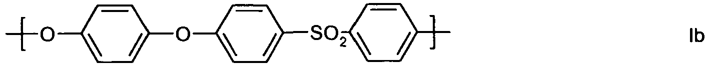

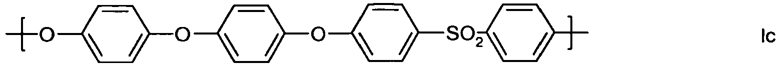

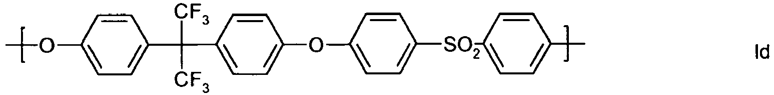

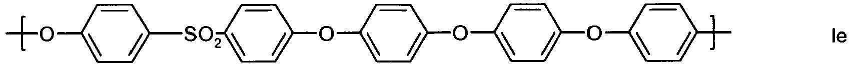

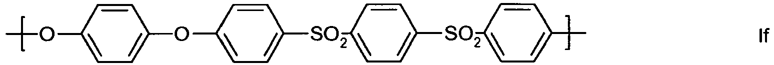

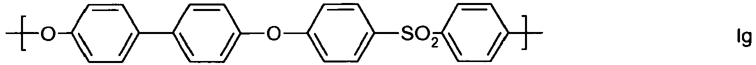

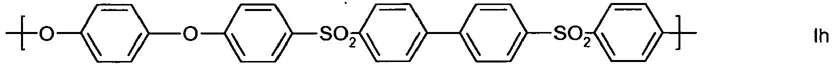

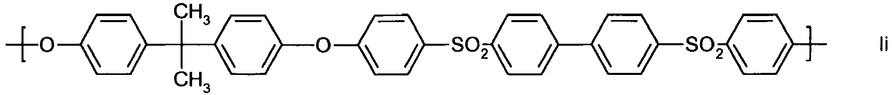

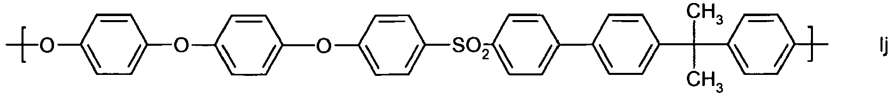

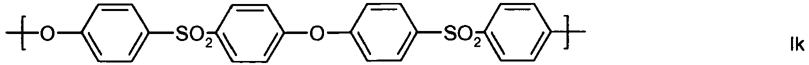

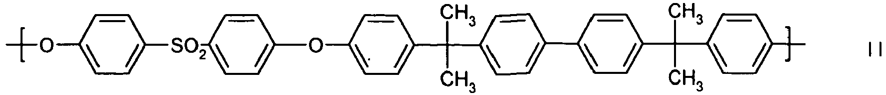

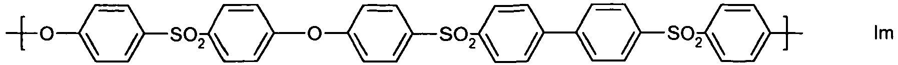

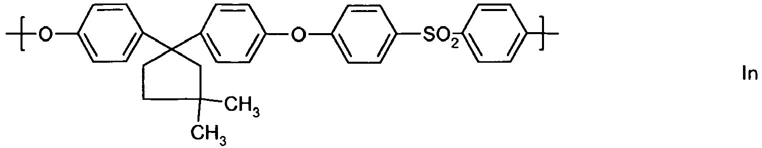

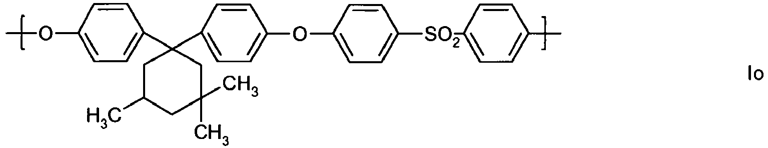

Zusätzlich zu den bevorzugten Bausteinen la bis Io sind auch solche Bausteine bevorzugt, in denen eine oder mehrere 1,4-Phenyleneinheiten, die von Hydrochinon abstammen, durch 1,3-Phenyleneinheiten, die von Resorcin abstammen- oder durch Naphthyleneinheiten, die von Dihydroxynaphthalin abstammen, ersetzt sind.

Als Bausteine der allgemeinen Formel I besonders bevorzugt sind die Bausteine la, Ig und Ik. Es ist außerdem besonders bevorzugt, wenn die Polyarylenethersulfone der Komponente (A) im Wesentlichen aus einer Sorte Bausteine der allgemeinen Formel I, insbesondere aus einem Baustein ausgewählt aus Ia, Ig und Ik aufgebaut sind.

In einer besonders bevorzugten Ausführungsform ist Ar = 1,4-Phenylen, t = 1, q = 0, T ist eine chemische Bindung und Y = SO₂. Aus der vorgenannten Wiederholungseinheit aufgebaute besonders bevorzugte Polyarylenethersulfone (A) werden als Polyphenylensulfon (PPSU) bezeichnet (Formel Ig).

In einer weiteren besonders bevorzugten Ausführungsform ist Ar = 1,4-Phenylen, t = 1, q = 0, T = C(CH₃)₂ und Y = SO₂. Aus der vorgenannten Wiederholungseinheit aufgebaute besonders bevorzugte Polyarylenethersulfone (A) werden als Polysulfon (PSU) bezeichnet (Formel Ia).

In einer weiteren besonders bevorzugten Ausführungsform ist Ar = 1,4-Phenylen, t = 1, q = 0, T = Y = SO₂. Aus der vorgenannten Wiederholungseinheit aufgebaute besonders bevorzugte Polyarylenethersulfone (A) werden als Polyethersulfon (PESU) bezeichnet (Formel Ik). Diese Ausführungsform ist ganz besonders bevorzugt. Abkürzungen wie PPSU, PESU und PSU entsprechen im Rahmen der vorliegenden Erfindung der DIN EN ISO 1043-1:2001.

Die Polyarylenethersulfone (A) der vorliegenden Erfindung weisen vorzugsweise gewichtsmittlere Molekulargewichte M_{w} von 10.000 bis 150.000 g/mol, insbesondere von 15.000 bis 120.000 g/mol, besonders bevorzugt von 18.000 bis 100.000 g/mol auf, bestimmt mittels Gelpermeationschromatographie im Lösungsmittel Dimethylacetamid gegen engverteiltes Polymethylmethacrylat als Standard.

Darüber hinaus weist das Polyarylenethersulfon (A) vorzugsweise eine scheinbare Schmelzviskosität bei 350 °C/1150 s⁻¹ von 150 bis 300 Pa s, bevorzugt von 150 bis 275 Pa s auf.

Die Fließfähigkeit wurde anhand der Schmelzeviskosität beurteilt. Die Schmelzeviskosität wurde mittels eines Kapillarrheometers bestimmt. Dabei wurde die scheinbare Viskosität bei 350°C als Funktion der Scherrate in einem Kapillarviskosimeter (Göttfert Kapillarviskosimeter Rheograph 2003) mit einer Kreiskapillare der Länge 30 mm, einem Radius von 0,5 mm, einem Einlaufwinkel der Düse von 180°, einem Durchmesser des Reservoirgefäßes der Schmelze von 12 mm und mit einer Vorheizzeit von 5 Minuten bestimmt. Angegeben sind die bei 1150 s⁻¹ bestimmten Werte.

Herstellungsverfahren, die zu den vorgenannten Polyarylenethern führen, sind dem Fachmann an sich bekannt und beispielsweise in Herman F. Mark, "Encyclopedia of Polymer Science and Technology", third edition, Volume 4, 2003, Kapitel "Polysulfones" auf den Seiten 2 bis 8 sowie in Hans R. Kricheldorf, "Aromatic Polyethers" in: Handbook of Polymer Synthesis, second edition, 2005 auf den Seiten 427 bis 443 beschrieben.

Besonders bevorzugt ist die Umsetzung mindestens einer aromatischen Verbindung mit zwei Halogensubstituenten und mindestens einer aromatischen Verbindung mit zwei funktionellen Gruppen, die gegenüber vorgenannten Halogensubstituenten reaktiv sind, in aprotischen polaren Lösungsmitteln in Gegenwart von wasserfreiem Alkalicarbonat, insbesondere Natrium-, Kalium-, Calciumcarbonat oder Mischungen davon, wobei Kaliumcarbonat ganz besonders bevorzugt ist. Eine besonders geeignete Kombination ist N-Methylpyrrolidon als Lösungsmittel und Kaliumcarbonat als Base.

Vorzugsweise weisen die Polyarylenether (A) entweder Halogenendgruppen, insbesondere Chlorendgruppen, oder veretherte Endgruppen, insbesondere Alkyletherendgruppen, auf, welche durch Umsetzung der OH- bzw. Phenolat-Endgruppen mit geeigneten Veretherungsmitteln erhältlich sind.

Geeignete Veretherungsmittel sind beispielsweise monofunktionelles Alkyl- oder Arylhalogenid, beispielsweise C₁-C₆-Alkylchlorid, -bromid oder -iodid, bevorzugt Methylchlorid, oder Benzylchlorid, -bromid oder -iodid oder Mischungen davon. Bevorzugte Endgruppen im Rahmen der Polyarylenether der Komponente (A) sind Halogen, insbesondere Chlor, Alkoxy, insbesondere Methoxy, Aryloxy, insbesondere Phenoxy, oder Benzyloxy.

Erfindungsgemäß enthält die thermoplastische Formmasse mindestens ein oder mehrere, vorzugsweise aber ein thermotropes Polymer (B).

Komponente (B) liegt in den erfindungsgemäßen thermoplastischen Formmassen vorzugsweise in Mengen von 0,5 bis 20 Gew.-%, besonders bevorzugt von 0,7 bis 18 Gew.-%, insbesondere von 1 bis 15 Gew.-%, ganz besonders bevorzugt von 1,5 bis 10 Gew.-% vor, wobei die Summe der Gewichtsanteile der Komponenten (A) bis (E) 100 Gew.-% bezogen auf die Formmasse ergibt.

Unter einem thermotropen Polymer (B) wird ein Polymer verstanden, das in einem bestimmten Temperaturbereich flüssig-kristalline Eigenschaften aufweist. Besonders geeignet sind thermotrope Polymere, die in dem Temperaturbereich, in dem die erfindungsgemäßen Formmassen verarbeitet werden, flüssig-kristallin sind. Die Übergangstemperatur Tk der flüssig-kristallinen Phase in der Schmelze der als Komponente (B) geeigneten Polymere liegt im Allgemeinen bei 350 °C oder darunter. Bevorzugte flüssig-kristalline Polymere (B) haben Übergangstemperaturen Tk von 300 °C oder darunter. Insbesondere betragen die Übergangstemperaturen Tk von 200 bis 350 °C. Tk kann mittels DSC-Messung mit einer Aufheizrate von 20 K/min ermittelt werden, wobei die im 2. Heizlauf ermittelten Werte angegeben werden.

Als thermotrope Komponente (B) kommen in der Regel thermotrope Polyester, thermotrope Polyesteramide, thermotrope Polyamide oder deren Mischungen in Betracht. Bevorzugt werden vollaromatische Polyester oder Copolyester als Komponente (B) eingesetzt.

Geeignete flüssig-kristalline Polymere haben zum Beispiel wiederkehrende Einheiten der Struktur: 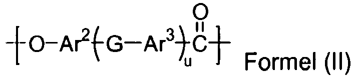 oder 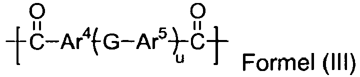 oder 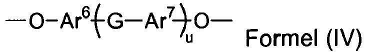 oder
Einheiten aus der Struktur (II und III) oder (II und IV) oder (III und IV)oder (II und III und IV).

Dabei stehen:
Ar² bis Ar⁷ unabhängig voneinander jeweils für eine Arylengruppe, die 6 bis 18 Kohlenstoffatome haben können. Als Arylengruppen eignen sich unter anderem Phenylen, Naphthylen oder Biphenylen. Die Arylengruppen können substituiert sein oder Substituenten tragen. Zu diesen Substituenten zählen von C₁ bis C₁₀-Alkylreste wie Methyl, n-Propyl, n-Butyl oder t-Butyl sowie von C₁ bis C₄-Alkoxygruppen wie Methoxy, Ethoxy oder Butoxy. Daneben können die Substituenten auch Phenylreste oder Halogenatome, insbesondere Chlor sein.

Die Variable u kann den Wert 0 oder 1 annehmen.

G steht für SO₂ oder einen 1,4-Benzochinonrest.

Beispielsweise leiten sich derartige Polyester ab von einem oder mehreren der folgenden monomeren Bausteine: p-Hydroxybenzoesäure, m-Hydroxybenzoesäure, Terephthalsäure, Isophthalsäure, Hydrochinon, Phenylhydrochinon, alkylsubstituierte Hydrochinone, insbesondere 2-Methylhydrochinon, 2-Ethylhydrochinon, 2-n-Propylhydrochinon, 2-i-Propylhydrochinon, 2-t-Butylhydrochinon, halogensubstituierte 2-n-Hydrochinone, insbesondere 2-Chlorhydrochinon.

Weitere Beispiele geeigneter Monomere sind 4,4'-Dihydroxydiphenylether, 1,3-Dihydroxybenzol, 4,4'-Biphenol, 2,6,2',6'-Tetramethylbiphenol, 2,6-Dihydroxynaphthalin, 2,7- Dihydroxynaphthalin, 2,6-Naphthalindicarbonsäure, 6-Hydroxy-2-Naphthalincarbonsäure, 4,4'-Bis-(p-hydroxyphenoxy)diphenylsulfon, 2,6-Dihydroxyanthrachinon, 4,4'-Diphenyletherdicarbonsäure oder 4,4'Dihydroxybenzophenon. Besonders geeignet sind p-Acetoxybenzoesäure und 2,6-Acetoxynaphthalincarbonsäure sowie durch Veresterung aktivierte Hydroxyverbindungen.

Ebenfalls geeignet sind Polyester, die sich von oben genannten Dicarbonsäuren und aliphatischen oder cycloaliphatischen Polyolen, bevorzugt Diolen ableiten. Als Diole kommen Verbindungen gemäß Formel (V) in Betracht:

HO-R⁸-OH Formel (V)

R⁸ steht hierbei für von C₂- bis C₁₈-Alkyleneinheiten, bevorzugt von C₂- bis C₁₀-Alkyleneinheiten, in substituierter oder unsubstituierter Form. Geeignet sind zum Beispiel Ethylen, Propylen, Butylen, Pentylen oder Hexylen. Besonders bevorzugt ist je eine der beiden Hydroxygruppen an das erste beziehungsweise letzte Kohlenstoffatom gebunden. R⁸ kann außerdem einen cycloaliphatischen, unsubstituierten oder substituierten Rest mit von 3 bis 13 Kohlenstoffatomen, bevorzugt von 5 bis 8 Kohlenstoffatomen beispielsweise Cyclopropylen, Cyclopentylen oder Cyclohexylen darstellen. Bevorzugte Diole sind Ethylenglykole, 1,4-Butandiol, 2,2-Dimethyl-1,3-propandiol, 1,6-Hexandiol, 1,10-Decandiol und 1,4-Cyclohexandimethanol.

Besonders bevorzugte erfindungsgemäße Formmassen enthalten als Komponente (B) flüssig-kristalline Copolyester mit wiederkehrenden Einheiten der Struktur 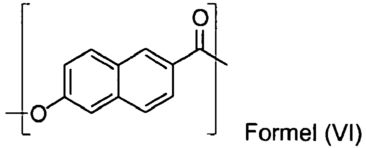 und

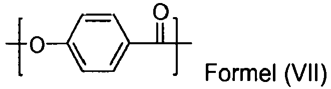

Im Allgemeinen enthalten diese Copolyester von 10 bis 90 Mol-% der Einheiten (VI) und von 10 bis 90 Mol-% der Einheiten (VII).

Des Weiteren kommen als flüssig-kristalline Komponente (B) auch Polyesterimide in Betracht, die wiederkehrende Einheiten der Struktur (VIII) alleine und/oder in Kombination mit Einheiten nach der Formel (III) und/oder (IV) und/oder (V) zeigen.

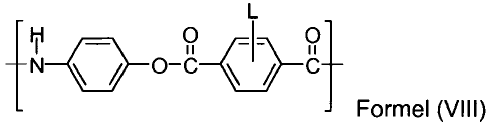

Der Rest L kann Wasserstoff, von C₁- bis C₁₀-Alkyl, zum Beispiel Methyl, Ethyl, n-Propyl, i-Propyl oder n-Butyl, bevorzugt Methyl, von C₁- bis C₁₀-Alkoxy wie Methoxy, Ethoxy, n-Propoxy, i-Propoxy oder n-Butoxy, bevorzugt Methoxy oder Halogen, bevorzugt Chlor sein.

Die Molekulargewichte Mw (Gewichtsmittel) der als Komponente (B) erfindungsgemäß verwendeten flüssig-kristallinen Polymeren betragen im Allgemeinen von 1500 bis 150000 g/mol, bevorzugt von 2500 bis 50000 g/mol. Mw kann mittels Lichtstreuung bei 25 °C in einer Lösung von Phenol zu ortho-Dichlorbenzol im Verhältnis 1 zu 1 bestimmt werden.

Das thermotrope Polymer (B) kann eine HDT-Wärmeformbeständigkeit (Methode A, Randfaserspannung o_{f} von 1,80 N/mm², konstante Heizrate von 120 K/h) gemessen nach DIN ISO 75-1 von 140 bis 200 °C aufweisen.

Derartige flüssig-kristalline Polymere sind an sich bekannt oder können nach bekannten Methoden hergestellt werden. Geeignete Verfahren zur Herstellung werden beispielsweise in der US-A-4 161 470 erwähnt. Weitere Herstellverfahren können zum Beispiel der EP-A-139 303, EP-A-226 839, EP-A-226 978, EP-A-225 539, EP-A-226 847 und der EP-A-257558 entnommen werden.

Erfindungsgemäß enthalten die thermoplastischen Formmassen mindestens einen oder mehrere, vorzugsweise aber einen Polyarylenether (C) mit im Mittel mindestens 1,5 phenolischen Endgruppen pro Polymerkette. Der Ausdruck "im Mittel" bedeutet dabei ein Zahlenmittel.

Komponente (C) liegt in den erfindungsgemäßen thermoplastischen Formmassen vorzugsweise in Mengen von 0,5 bis 10 Gew.-%, besonders bevorzugt von 0,5 bis 9 Gew.-%, insbesondere von 1 bis 8 Gew.-%, ganz besonders bevorzugt von 3 bis 8 Gew.-% vor, wobei die Summe der Gewichtsanteile der Komponenten (A) bis (E) 100 Gew.-% bezogen auf die Formmasse ergibt.

Die Herstellung von Polyarylenethern bei gleichzeitiger Steuerung der Endgruppen ist aus der Literatur bekannt (McGrath et al. Polym. Eng. Sci. 17, 647 (1977)).

Vorzugsweise weisen die Polyarylenether (C) mindestens 0,15 Gew.-%, insbesondere mindestens 0,18 Gew.-%, besonders bevorzugt mindestens 0,2 Gew.-% phenolische Endgruppen bezogen auf die Gewichtsmenge der Komponente (C), jeweils berechnet als Gewichtsmenge OH, auf. Die mittlere Anzahl der endständigen phenolischen Endgruppen kann mittels Titration bestimmt werden.

Die jeweilige Obergrenze für den Gehalt phenolischer Endgruppen in den Komponenten (C) ergibt sich aus der Zahl der zur Verfügung stehenden Endgruppen pro Molekül (zwei im Fall linearer Polyarylenether) und der zahlenmittleren Kettenlänge. Entsprechende Berechnungen sind dem Fachmann bekannt.

Das Gewichtsverhältnis der Komponente (A) zu Komponente (C) vorzugsweise von 50 zu 1 bis 2 zu 1, insbesondere von 25 zu 1 bis 5 zu 1, besonders bevorzugt von 20 zu 1 bis 10 zu 1.

Die Polyarylenether (A) und (C) gemäß der vorliegenden Erfindung können - abgesehen von den Endgruppen - gleich sein oder aus unterschiedlichen Bausteinen aufgebaut sein und/oder ein unterschiedliches Molekulargewicht aufweisen, sofern sie dann noch miteinander vollständig mischbar sind.

Polyarylenether sind dem Fachmann als Polymerklasse bekannt. Im Prinzip kommen alle dem Fachmann bekannten und/oder nach bekannten Methoden herstellbaren Polyarylenether als Bestandteil der Komponente (C) in Betracht. Entsprechende Methoden wurden bereits unter Komponente (A) erläutert.

Bevorzugte Polyarylenether (C) sind unabhängig voneinander aus Bausteinen der allgemeinen Formel I (siehe oben) aufgebaut. Besonders bevorzugte Polyarylenethersulfone (C) werden als Polyethersulfon (PESU) bezeichnet. Diese Ausführungsform ist ganz besonders bevorzugt.

Im Allgemeinen weisen die bevorzugten Polyarylenether (C) mittlere Molekulargewichte Mₙ (Zahlenmittel) im Bereich von 5.000 bis 60.000 g/mol und relative Viskositäten von 0,20 bis 0,95 dl/g auf. Die relativen Viskositäten der Polyarylenether werden in 1 gew.-%iger N-Methylpyrrolidon-Lösung bei 25°C nach DIN EN ISO 1628-1 bestimmt.

Die Polyarylenether (C) der vorliegenden Erfindung weisen vorzugsweise gewichtsmittlere Molekulargewichte M_{w} von 10.000 bis 150.000 g/mol, insbesondere von 15.000 bis 120.000 g/mol, besonders bevorzugt von 18.000 bis 100.000 g/mol auf, bestimmt mittels Gelpermeationschromatographie im Lösungsmittel Dimethylacetamid gegen engverteiltes Polymethylmethacrylat als Standard.

Ein bevorzugtes Verfahren zur Herstellung von Polyarylenethern der Komponente (C) wird nachfolgend beschrieben und umfasst folgende Schritte in der Reihenfolge a-b-c:
(a) Bereitstellung mindestens eines Polyarylenethers (C*) in Gegenwart eines Lösungsmittels (L), der eine der gewünschten Komponente (C) entsprechenden Gehalt an phenolischen Endgruppen aufweist, wobei dessen phenolische Endgruppen als Phenolat-Endgruppen vorliegen, und der vorzugsweise aufgebaut ist aus Bausteinen der allgemeinen Formel I wie oben definiert,
(b) Zugabe mindestens einer Säure, vorzugsweise mindestens einer mehrfunktionellen Carbonsäure, und
(c) Gewinnung der Polyarylenether der Komponente (C) als Feststoff.

Die Bereitstellung des Polyarylenethers (C*) erfolgt dabei bevorzugt in Form einer Lösung im Lösungsmittel (L).

Die Bereitstellung der beschriebenen Polyarylenether (C*) kann im Prinzip auf verschiedene Weise erfolgen. Beispielsweise kann ein entsprechender Polyarylenether (C*) direkt mit einem geeigneten Lösungsmittel in Kontakt gebracht und direkt, d. h. ohne weitere Umsetzung, im erfindungsgemäßen Verfahren eingesetzt werden. Alternativ können Präpolymere von Polyarylenethern eingesetzt und zur Umsetzung in Gegenwart eines Lösungsmittels gebracht werden, wobei die beschriebenen Polyarylenether (C*) in Gegenwart des Lösungsmittels entstehen.

Die Bereitstellung des Polyarylenethers oder der Polyarylenether (C*) in Schritt (a) erfolgt jedoch vorzugsweise durch Umsetzung mindestens einer Ausgangsverbindung der Struktur X-Ar-Y (s1) mit mindestens einer Ausgangsverbindung der Struktur HO-Ar¹-OH (s2) in Gegenwart eines Lösungsmittels (L) und einer Base (B), wobei
- Y ein Halogenatom ist,
- X ausgewählt wird aus Halogenatomen und OH und
- Ar und Ar¹ unabhängig voneinander eine Arylengruppe mit 6 bis 18 Kohlenstoffatomen darstellen.

Das Verhältnis von (s1) und (s2) wird dabei so gewählt, dass der gewünschte Gehalt an phenolischen Endgruppen entsteht. Geeignete Ausgangsverbindungen sind dem Fachmann bekannt oder können nach bekannten Methoden hergestellt werden. Hydrochinon, Resorcin, Dihydroxynaphthalin, insbesondere 2,7- Dihydroxynaphthalin, 4,4'-Dihydroxydiphenylsulfon, Bisphenol A und 4,4'-Dihydroxybiphenyl sind als Ausgangsverbindung (s2) besonders bevorzugt.

Es ist jedoch auch möglich, trifunktionelle Verbindungen zu verwenden. In diesem Fall entstehen verzweigte Strukturen. Sofern eine trifunktionelle Ausgangsverbindung (s2) zum Einsatz kommt, ist 1,1,1-Tris(4-hydroxyphenyl)ethan bevorzugt.

Die einzusetzenden Mengenverhältnisse ergeben sich im Prinzip aus der Stöchiometrie der ablaufenden Polykondensationsreaktion unter rechnerischer Abspaltung von Chlorwasserstoff und werden vom Fachmann in bekannter Weise eingestellt. Um jedoch die Zahl der phenolischen OH-Endgruppen zu erhöhen, ist ein Überschuss an (s2) zu bevorzugen.

Besonders bevorzugt beträgt das Molverhältnis (s2)/(s1) in dieser Ausführungsform von 1,005 bis 1,2, insbesondere 1,01 bis 1,15, ganz besonders bevorzugt 1,02 bis 1,1.

Alternativ kann auch eine Ausgangsverbindung (s1) mit X = Halogen und Y = OH eingesetzt werden. In diesem Fall erfolgt die Einstellung eines Überschusses von Hydroxygruppen durch Zugabe der Ausgangsverbindung (s2). In diesem Fall beträgt das Verhältnis der eingesetzten phenolischen Endgruppen zu Halogen vorzugsweise von 1,01 bis 1,2, insbesondere 1,03 bis 1,15, ganz besonders bevorzugt 1,05 bis 1,1.

Vorzugsweise beträgt der Umsatz bei der Polykondensation mindestens 0,9, wodurch ein ausreichend hohes Molekulargewicht gewährleistet wird. Sofern als Vorstufe des Polyarylenethers ein Präpolymer verwendet wird, bezieht sich der Polymerisationsgrad auf die Zahl der eigentlichen Monomere.

Bevorzugte Lösungsmittel (L) sind aprotische polare Lösungsmittel. Geeignete Lösungsmittel weisen außerdem einen Siedepunkt im Bereich von 80 bis 320°C, insbesondere 100 bis 280°C, bevorzugt von 150 bis 250°C auf. Geeignete aprotische polare Lösungsmittel sind beispielsweise hochsiedende Ether, Ester, Ketone, asymmetrisch halogenierte Kohlenwasserstoffe, Anisol, Dimethylformamid, Dimethylsulfoxid, Sulfolan, N-Ethyl-2-pyrrolidon und N-Methyl-2-pyrrolidon.

Vorzugsweise erfolgt die Umsetzung der Ausgangsverbindungen (s1) und (s2) in den genannten aprotischen polaren Lösungsmitteln (L), insbesondere N-Methyl-2-pyrrolidon.

Dem Fachmann ist an sich bekannt, dass die Umsetzung der phenolischen OH-Gruppen vorzugsweise in Gegenwart einer Base (Ba) erfolgt, um die Reaktivität gegenüber den Halogensubstituenten der Ausgangsverbindung (s1) zu erhöhen.

Vorzugsweise sind die Basen (Ba) wasserfrei. Geeignete Basen sind insbesondere wasserfreies Alkalicarbonat, vorzugsweise Natrium-, Kalium-, Calciumcarbonat oder Mischungen davon, wobei Kaliumcarbonat ganz besonders bevorzugt ist.

Eine besonders bevorzugte Kombination ist N-Methyl-2-pyrrolidon als Lösungsmittel (L) und Kaliumcarbonat als Base (Ba).

Die Umsetzung der geeigneten Ausgangsverbindungen (s1) und (s2) wird bei einer Temperatur von 80 bis 250°C, bevorzugt 100 bis 220°C durchgeführt, wobei die Obergrenze der Temperatur durch den Siedepunkt des Lösungsmittels begrenzt wird. Die Umsetzung erfolgt vorzugsweise in einem Zeitintervall von 2 bis 12 h, insbesondere von 3 bis 8 h.

Es hat sich als vorteilhaft erwiesen, in Anschluss an Schritt (a) und vor Ausführung des Schrittes (b) eine Filtration der Polymerlösung durchzuführen. Hierdurch wird der bei der Polykondensation gebildete Salzanteil sowie eventuell gebildete Gelkörper entfernt.

Es hat sich zudem als vorteilhaft herausgestellt, im Rahmen von Schritt (a) die Menge des Polyarylenethers (C*) bezogen auf das Gesamtgewicht der Mischung aus Polyarylenether (C*) und Lösungsmittel (L) von 10 bis 70 Gew.-%, vorzugsweise von 15 bis 50 Gew.-% einzustellen.

Im Rahmen von Schritt (b) erfolgt die Zugabe mindestens einer Säure, vorzugsweise mindestens einer mehrfunktionellen Carbonsäure zum Polyarylenether (C*) aus Schritt (a), vorzugsweise zur Lösung des Polyarylenethers (C*) im Lösungsmittel (L).

Auch kann mindestens eine mehrfunktionelle Carbonsäure zum Fällmedium hinzugefügt werden.

Unter "mehrfunktionell" ist eine Funktionalität von mindestens 2 zu verstehen. Die Funktionalität ist die (gegebenenfalls mittlere) Zahl an COOH-Gruppen pro Molekül. Unter mehrfunktionell wird eine Funktionalität von zwei oder höher verstanden. Im Rahmen der vorliegenden Erfindung bevorzugte Carbonsäuren sind di- und trifunktionelle Carbonsäuren.

Die Zugabe der mehrfunktionellen Carbonsäure kann auf verschiedene Weise erfolgen, insbesondere in fester oder flüssiger Form oder in Form einer Lösung, vorzugsweise in einem Lösungsmittel, welches mit dem Lösungsmittel (L) mischbar ist.

Vorzugsweise weist die mehrfunktionelle Carbonsäure ein zahlenmittleres Molekulargewicht von höchstens 1500 g/mol, insbesondere höchstens 1200 g/mol auf. Gleichzeitig weist die mehrfunktionelle Carbonsäure vorzugsweise ein zahlenmittleres Molekulargewicht von mindestens 90 g/mol auf.

Geeignete mehrfunktionelle Carbonsäuren sind insbesondere solche gemäß der allgemeinen Struktur (IX):

HOOC-R-COOH Formel (IX),

wobei R ein Kohlenwasserstoffrest mit von 2 bis 20 Kohlenstoffatomen repräsentiert, der optional weitere funktionelle Gruppen, vorzugsweise ausgewählt aus OH und COOH, enthält.

Bevorzugte mehrfunktionelle Carbonsäuren sind C₄ bis C₁₀-Dicarbonsäuren, insbesondere Bernsteinsäure, Glutarsäure, Adipinsäure, und Tricarbonsäuren, insbesondere Zitronensäure. Besonders bevorzugte mehrfunktionelle Carbonsäuren sind Bernsteinsäure und Zitronensäure.

Um eine ausreichende Umwandlung der Phenolat-Endgruppen in phenolische Endgruppen zu gewährleisten hat es sich als vorteilhaft erwiesen, die Menge der eingesetzten mehrfunktionellen Carbonsäure oder mehrfunktionellen Carbonsäuren in Bezug auf die Menge der Phenolat-Endgruppen einzustellen.

Es ist bevorzugt im Rahmen von Schritt (b) eine mehrfunktionelle Carbonsäure in einer Menge von 25 bis 200 mol-% Carboxylgruppen, vorzugsweise von 50 bis 150 mol-% Carboxylgruppen, besonders bevorzugt von 75 bis 125 mol-% Carboxylgruppen, bezogen auf die Stoffmenge an phenolischen Endgruppen zuzugeben.

Wird zu wenig Säure dosiert, ist das Fällverhalten der Polymerlösung ungenügend, während bei einer deutlichen Überdosierung eine Verfärbung des Produktes bei der weiteren Verarbeitung auftreten kann.

Im Rahmen von Schritt (c) erfolgt die Gewinnung des Polyarylenethers (C) als Feststoff. Grundsätzlich kommen verschiedene Verfahren zur Gewinnung als Feststoff in Betracht. Bevorzugt ist jedoch eine Gewinnung der Polymerzusammensetzung durch Ausfällung.

Die bevorzugte Ausfällung kann insbesondere durch Mischung des Lösungsmittels (L) mit einem schlechten Lösungsmittel (L') erfolgen. Ein schlechtes Lösungsmittel ist ein Lösungsmittel, in dem sich die Polymerzusammensetzung nicht löst. Ein solches schlechtes Lösungsmittel ist vorzugsweise ein Gemisch aus einem Nicht-Lösungsmittel und einem Lösungsmittel. Ein bevorzugtes Nicht-Lösungsmittel ist Wasser. Ein bevorzugtes Gemisch (L') aus einem Lösungsmittel mit einem Nicht-Lösungsmittel ist vorzugsweise ein Gemisch aus dem Lösungsmittel (L), insbesondere N-Methyl-4-pyrrolidon, und Wasser. Es ist bevorzugt, die Polymerlösung aus Schritt (b) zu dem schlechten Lösungsmittel (L') hinzuzugeben, was zur Ausfällung der Polymerzusammensetzung führt. Dabei wird vorzugsweise ein Überschuss des schlechten Lösungsmittels eingesetzt. Besonders bevorzugt erfolgt die Zugabe der Polymerlösung aus Schritt (a) in fein verteilter Form, insbesondere in Tropfenform.

Sofern als schlechtes Lösungsmittel (L') eine Mischung aus dem Lösungsmittel (L), insbesondere N-Methyl-2-pyrrolidon, und einem Nicht-Lösungsmittel, insbesondere Wasser, verwendet wird, dann ist ein Mischungsverhältnis von Lösungsmittel zu Nicht-lösungsmittel von 1:2 bis 1:100, insbesondere 1:3 bis 1:50 zu bevorzugen.

Als schlechtes Lösungsmittel (L') ist eine Mischung aus Wasser und N-Methyl-2-pyrrolidon (NMP) in Kombination mit N-Methyl-2-pyrrolidon als Lösungsmittel (L) bevorzugt. Besonders bevorzugt ist als schlechtes Lösungsmittel (L') ein Gemisch NMP/Wasser von 1:3 bis 1:50, insbesondere 1:30.

Die Ausfällung erfolgt besonders effizient, wenn der Gehalt der Polymerzusammensetzung im Lösungsmittel (L) bezogen auf das Gesamtgewicht der Mischung aus Polymerzusammensetzung und Lösungsmittel (L) von 10 bis 50 Gew.-%, vorzugsweise von 15 bis 35 Gew.-% beträgt.

Komponente (C) weist vorzugsweise einen Kaliumgehalt von höchstens 600 ppm auf. Der Kaliumgehalt wird mittels Atomspektrometrie bestimmt.

Die thermoplastischen Formmassen der vorliegenden Erfindung enthalten als Komponente (D) vorzugsweise mindestens einen faser- oder teilchenförmigen Füllstoff, besonders bevorzugt in einer Menge von 10 bis 70 Gew.-%, ganz besonders bevorzugt von 15 bis 65 Gew.-%, insbesondere von 20 bis 55 Gew.-%, zum Beispiel von 35 bis 50 Gew.-% bezogen auf insgesamt 100 Gew.-% der Komponenten (A) bis (F).

Die erfindungsgemäßen Formmassen können insbesondere teilchenförmige oder faserförmige Füllstoffe enthalten, wobei faserförmige Füllstoffe besonders bevorzugt sind.

Bevorzugte faserförmige Füllstoffe sind Kohlenstofffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte, bevorzugt einer Polyurethanschlichte und einem Haftvermittler ausgerüstet sein. Im Allgemeinen haben die verwendeten Kohlenstoff- und Glasfasern einen Durchmesser im Bereich von 6 bis 20 µm. Komponente (E) besteht somit besonders bevorzugt aus Glasfasern.

Die Einarbeitung der Glasfasern kann sowohl in Form von Kurzglasfasern als auch in Form von Endlossträngen (Rovings) erfolgen. Im fertigen Spritzgussteil liegt die mittlere Länge der Glasfasern vorzugsweise im Bereich von 0,08 bis 0,5 mm.

Kohlenstoff- oder Glasfasern können auch in Form von Geweben, Matten oder Glasseidenrovings eingesetzt werden.

Als teilchenförmige Füllstoffe eignen sich amorphe Kieselsäure, Carbonate wie Magnesiumcarbonat und Kreide, gepulverter Quarz, Glimmer, unterschiedlichste Silikate wie Tone, Muskovit, Biotit, Suzoit, Zinnmaletit, Talkum, Chlorit, Phlogopit, Feldspat, Calciumsilikate wie Wollastonit oder Aluminiumsilikate wie Kaolin, besonders kalzinierter Kaolin.

Bevorzugte teilchenförmige Füllstoffe sind solche, in denen mindestens 95 Gew.-%, bevorzugt mindestens 98 Gew.-% der Teilchen einen Durchmesser (größter Durchmesser durch das geometrische Zentrum), bestimmt am fertigen Produkt, von weniger als 45 µm, bevorzugt weniger als 40 µm aufweisen und deren so genanntes Aspektverhältnis im Bereich von 1 bis 25, bevorzugt im Bereich von 2 bis 20 liegt, bestimmt am fertigen Produkt. Das Aspektverhältnis ist das Verhältnis von Teilchendurchmesser zu Dicke (größte Ausdehnung zu kleinster Ausdehnung jeweils durch das geometrische Zentrum).

Die Teilchendurchmesser können dabei z. B. dadurch bestimmt werden, dass elektronenmikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, deren Durchmesser weniger als 40 µm beträgt, kann auch mittels Siebanalyse gemessen werden.

Besonders bevorzugt werden als teilchenförmige Füllstoffe Talkum, Kaolin, wie kalzinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 µm und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 µm und ein Aspektverhältnis von 1,2 bis 20, jeweils bestimmt am fertigen Produkt.

Die erfindungsgemäßen Formmassen können als Bestandteile der Komponente (E) Hilfsstoffe, insbesondere Verarbeitungshilfsmittel, Pigmente, Stabilisatoren, Flammschutzmittel oder Mischungen unterschiedlicher Additive enthalten. Übliche Zusatzstoffe sind beispielsweise auch Oxidationsverzögerer, Mittel gegen Wärmezersetzung und Zersetzung durch ultraviolettes Licht, Gleit- und Entformungsmittel, Farbstoffe und Weichmacher.

Der Anteil der Komponente (E) in der erfindungsgemäßen Formmasse beträgt insbesondere von 0 bis zu 40, vorzugsweise von 0,1 bis zu 30 Gew.-%, insbesondere 0,1 bis 25 Gew.-%, ganz besonders bevorzugt von 1 bis 20 Gew.-% bezogen auf das Gesamtgewicht der Komponenten (A) bis (E). Falls die Komponente E Stabilisatoren beinhaltet, beträgt der Anteil dieser Stabilisatoren üblicherweise bis zu 2 Gew.-%, vorzugsweise 0,01 bis 1 Gew.-%, insbesondere 0,01 bis 0,5 Gew.-%, bezogen auf die Summe der Gew.-% der Komponenten (A) bis (E).

Pigmente und Farbstoffe sind allgemein in Mengen von 0 bis 6, bevorzugt von 0,05 bis 5 und insbesondere von 0,1 bis 3 Gew.-%, bezogen auf die Summe der Gew.-% der Komponenten (A) bis (E), enthalten.

Die Pigmente zur Einfärbung von Thermoplasten sind allgemein bekannt, siehe zum Beispiel R. Gächter und H. Müller, Taschenbuch der Kunststoffadditive, Carl Hanser Verlag, 1983, Seiten 494 bis 510. Als erste bevorzugte Gruppe von Pigmenten sind Weißpigmente zu nennen, wie Zinkoxid, Zinksulfid, Bleiweiß [2 PbCO₃·Pb(OH)₂], Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet. Schwarze Farbpigmente, die erfindungsgemäß eingesetzt werden können, sind Eisenoxidschwarz (Fe₃O₄), Spinellschwarz [Cu(Cr, Fe)₂O₄], Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird. Siehe hierzu G. Benzing, Pigmente für Anstrichmittel, Expert-Verlag (1988), Seiten 78 ff.

Zur Einstellung bestimmter Farbtöne können anorganische Buntpigmente, wie Chromoxidgrün oder organische Buntpigmente, wie Azopigmente oder Phthalocyanine eingesetzt werden. Derartige Pigmente sind dem Fachmann bekannt.

Oxidationsverzögerer und Wärmestabilisatoren, die den thermoplastischen Formmassen gemäß der Erfindung zugesetzt werden können, sind zum Beispiel Halogenide von Metallen der Gruppe I des Periodensystems, zum Beispiel Natrium-, Kalium-, Lithium-Halogenide, zum Beispiel Chloride, Bromide oder lodide. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf die Summe der Gew.-% der Komponenten (A) bis (E) einsetzbar.

Beispiele für UV-Stabilisatoren sind verschiedene substituierte Resorcine, Salicylate, Benzotriazole und Benzophenone, die im Allgemeinen in Mengen bis zu 2 Gew.-% bezogen auf die Summe der Gew.-% der Komponenten (A) bis (E) eingesetzt werden.

Gleit- und Entformungsmittel, die in der Regel in Mengen bis zu 1 Gew.-% bezogen auf die Summe der Gew.-% der Komponenten (A) bis (E) zugesetzt werden, sind Stearylalkohol, Stearinsäurealkylester und -amide sowie Ester des Pentaerythrits mit langkettigen Fettsäuren. Es können auch Dialkylketone, zum Beispiel Distearylketon, eingesetzt werden.

Als bevorzugten Bestandteil enthalten die erfindungsgemäßen Formmassen von 0,1 bis 2, bevorzugt 0,1 bis 1,75, besonders bevorzugt 0,1 bis 1,5 Gew.-% und insbesondere von 0,1 bis 0,9 Gew.-% (bezogen auf die Summe der Gew.-% der Komponenten (A) bis (E)) an Stearinsäure und/oder Stearaten. Im Prinzip können auch andere Stearinsäurederivate wie Ester der Stearinsäure eingesetzt werden.

Stearinsäure wird bevorzugt durch Hydrolyse von Fetten hergestellt. Die dabei erhaltenen Produkte stellen üblicherweise Mischungen aus Stearinsäure und Palmitinsäure dar. Daher haben solche Produkte einen breiten Erweichungsbereich, zum Beispiel von 50 bis 70 °C, je nach Zusammensetzung des Produkts. Bevorzugt werden Produkte mit einem Anteil an Stearinsäure von mehr als 20, besonders bevorzugt mehr als 25 Gew.-% verwendet. Es kann auch reine Stearinsäure (> 98 %) verwendet werden.

Des Weiteren kann Komponente (E) auch Stearate beinhalten. Stearate können entweder durch Umsetzung entsprechender Natriumsalze mit Metallsalzlösungen (zum Beispiel CaCl₂, MgCl₂, Aluminiumsalze) oder durch direkte Umsetzung der Fettsäure mit Metallhydroxid hergestellt werden (siehe zum Beispiel Baerlocher Additives, 2005). Bevorzugt wird Aluminiumtristearat verwendet.

Als weitere Zusatzstoffe kommen auch so genannte Nukleierungsmittel, wie beispielsweise Talkum, in Betracht.

Die Reihenfolge, in der die Komponenten (A) bis (E) gemischt werden, ist beliebig.

Die erfindungsgemäßen Formmassen können nach an sich bekannten Verfahren, beispielsweise Extrusion, hergestellt werden. Die erfindungsgemäßen Formmassen können z.B. hergestellt werden, indem man die Ausgangskomponenten in üblichen Mischvorrichtungen wie Schneckenextruder, vorzugsweise Zweischneckenextruder, Brabender-Mischer, Banbury-Mischer oder Kneter mischt und anschließend extrudiert. Nach der Extrusion wird das Extrudat abgekühlt und zerkleinert. Die Reihenfolge der Mischung der Komponenten kann variiert werden. Entsprechend können zwei oder mehr als zwei Komponenten vorgemischt werden, es können aber auch alle Komponenten gemeinsam gemischt werden.

Um eine möglichst homogene Mischung zu erhalten, ist eine intensive Durchmischung vorteilhaft. Dazu sind im Allgemeinen mittlere Mischzeiten von 0,2 bis 30 Minuten bei Temperaturen von 290 bis 380°C, bevorzugt 300 bis 370°C, erforderlich. Nach der Extrusion wird das Extrudat in der Regel abgekühlt und zerkleinert.

Die erfindungsgemäßen thermoplastischen Formmassen können vorteilhaft zur Herstellung von Formteilen, Fasern, Schäumen oder Filmen verwendet werden. Die erfindungsgemäßen Formmassen eignen sich insbesondere zur Herstellung von Formteilen für Haushaltsartikel, elektrische oder elektronische Bauteile sowie zur Herstellung von Formteilen für den Fahrzeugsektor, insbesondere Automobil.

Die folgenden Beispiele erläutern die Erfindung näher, ohne sie einzuschränken.

### Zitierte ISO-Normen

DIN ISO 527: Kunststoffe - Bestimmung der Zugeigenschaften - Teil 1: Allgemeine Grundsätze (ISO 527-1:1993 einschließlich Corr 1: 1994); Deutsche Fassung EN ISO 527-1:1996

DIN ISO 179: Kunststoffe - Bestimmung der Charpy-Schlageigenschaften - Teil 2: Instrumentierte Schlagzähigkeitsprüfung (ISO 179-2:1997); Deutsche Fassung EN ISO 179:1999.

DIN EN ISO 1628-1: Kunststoffe - Bestimmung der Viskosität von Polymeren in verdünnter Lösung durch ein Kapillarviskosimeter - Teil 1: Allgemeine Grundlagen (ISO 1628-1:2009); Deutsche Fassung EN ISO 1628-1:2009

DIN EN ISO 1043-1: Kunststoffe - Kennbuchstaben und Kurzzeichen - Teil 1: Basis-Polymere und ihre besonderen Eigenschaften (ISO 1043-1:2001); Deutsche Fassung EN ISO 1043-1:2002.

DIN EN ISO 75-1 DE: Kunststoffe - Bestimmung der Wärmeformbeständigkeitstemperatur - Teil 1: Allgemeines Prüfverfahren (ISO 75-1:2004); Deutsche Fassung EN ISO 75-1:2004.

ISO 1133 Plastics - Determination of the melt mass-flow rate (MFR) and the melt volume-flow rate (MVR) of thermoplastics.

### Allgemeine Anmerkungen

Die E-Moduli, die Reißfestigkeit und die Reißdehnung der Proben wurden im Zugversuch nach DIN ISO 527 an Schulterstäben ermittelt.

Die Schlagzähigkeit der Glasfasern enthaltenden Produkte wurde an ISO-Stäben nach DIN ISO 179 1eU bestimmt. Die Kerbschlagzähigkeit wurde ebenfalls an ISO-Stäben nach ISO 1791 eA gemessen.

Die Schmelzeviskosität wurde mittels eines Kapillarrheometers bestimmt. Dabei wurde die scheinbare Viskosität bei 380°C als Funktion der Scherrate in einem Kapillarviskosimeter (Göttfert Kapillarviskosimeter Rheograph 2003) mit einer Kreiskapillare der Länge 30 mm, einem Radius von 0,5 mm, einem Einlaufwinkel der Düse von 180°, einem Durchmesser des Reservoirgefäßes der Schmelze von 12 mm und mit einer Vorheizzeit von 5 Minuten bestimmt. Angegeben sind die bei 1000 s⁻¹ bestimmten Werte. Die Messung wurde für eine Stunde fortgeführt. Angegeben ist der Quotient aus dem Messwert nach einer Stunde und dem Ausgangswert.

Die Viskositätszahl der Polyarylenether wurde in 1 %-iger Lösung von N-Methylpyrrolidon bei 25°C gemäß DIN EN ISO 1628-1 bestimmt.

Die Fließfähigkeit erfolgt mittels MVR-Messung nach ISO 1133 bei 360 °C Schmelzetemperatur und einer Auflage von 10 kg.

### Beispiele

### Komponente A1

Als Komponente A1 wurde ein Polyethersulfon mit einer Viskositätszahl von 49,0 ml/g verwendet. Das verwendete Produkt wies 0,19 Gew.-% CI-Endgruppen und 0,23 Gew.-% OCH₃-Endgruppen auf. Die bei 350°C/1150 s⁻¹ bestimmte scheinbare Schmelzeviskosität beträgt 263 Pa*s.

### Komponente A2

Als Komponente A2 wurde ein Polyethersulfon mit einer Viskositätszahl von 43,4 ml/g verwendet. Das verwendete Produkt wies 0,24 Gew.-% CI-Endgruppen und 0,27 Gew.-% OCH₃-Endgruppen auf. Die bei 350°C/1150 s⁻¹ bestimmte scheinbare Schmelzeviskosität beträgt 179 Pa*s.

### Komponente B

Als thermoptropes Polymer B wird ein flüssigkristalliner Copolyester mit wiederkehrenden Einheiten der Formel VI und VII, charakterisiert durch einen E-Modul von 10,4 GPa und einer HDTA-Wärmeformbeständigkeit gemessen bei XXX nach DIN ISO 75-1 von 187 °C verwendet.

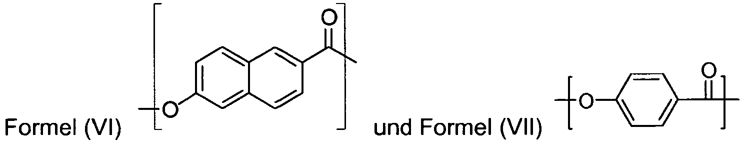

### Komponente C

Als Komponente C wurde ein Polyethersulfon mit einer Viskositätszahl von 55,6 ml/g verwendet, welches 0,20 Gew.-% OH-Endgruppen und 0,02 Gew.% CI-Endgruppen, bezogen auf die Gesamtmasse des Polymers, aufwies.

### Komponente CV1

Als Komponente CV1 wurde ein mit Maleinsäureanhdrid funktionalisertes Polyethersulfon verwendet, welches eine Viskositätszahl von 45,2 ml/g und einen Anhydridanteil (Bestimmt mittels FT-IR-Spektroskopie) von 0,32 Gew.-% aufwies.

### Komponente D

Als Komponente D wurden Schnittglasfasern mit einer Stapellänge von 4,5 mm und einem Faserdurchmesser von 10 µm eingesetzt die mit einer Polyurethanschlichte versehen waren.

### Komponente V

Als Komponente V wurde ein Polyphenylensulfid mit einer Schmelzeviskosität von 76 Pa*s bei 350°C und einer Scherrate von 1150 s⁻¹ verwendet.

**Tabelle 2:**

| Versuch | V1 | V2 | V3 | 4 | V5 | V6 | V7 | 8 | V9 | V10 |
|---|---|---|---|---|---|---|---|---|---|---|
| A1 | 60 | 55 | 57,5 | 52,5 | - | - | - | - | - | - |
| A2 | - | - | - | - | 55 | 50 | 52,5 | 47,5 | 47,5 | 41 |
| B | - | 0 | 2,5 | 2,5 | - | - | 2,5 | 2,5 | 2,5 | - |
| C1 | - | 5 | - | 5 | - | 5 | - | 5 | - | - |
| CV1 | - | - | - | - | - | - | - | - | 5 | - |
| D | 40 | 40 | 40 | 40 | 45 | 45 | 45 | 45 | 45 | 45 |
| V | - | - | - | - | - | - | - | - | - | 14 |
| | | | | | | | | | | |
| E-Modul [GPa] | 13,0 | 13,1 | 13,6 | 13,8 | 15,2 | 15,9 | 16,2 | 16,1 | 16,2 | 16,7 |
| E-Modul [GPa] bei 180°C | 10,4 | 10,5 | 10,9 | 11,0 | 12,6 | 12,8 | 13,3 | 13,2 | 12,8 | 8,9 |
| Reißdehnung [%] | 1,8 | 2,0 | 1,4 | 2,2 | 1,4 | 1,5 | 1,1 | 1,5 | 0,9 | 1,3 |
| Reißfestigkeit [MPa] | 166 | 166 | 153 | 172 | 168 | 174 | 152 | 179 | 145 | 143 |
| ISO 179 1eU [kJ/m²] | 45 | 49 | 37 | 53 | 45 | 46 | 33 | 51 | 34 | 39 |
| ISO 179 1eA [kJ/m²] | 8,8 | 9,2 | 7,2 | 9,7 | 9,3 | 9,5 | 8,6 | 9,9 | 8,2 | 7,5 |
| MVR [ml/10'] 360°C/10 kg | 52 | 42 | 67 | 61 | 85 | 63 | 102 | 87 | 121 | 96 |

## Patentansprüche

1. Formmasse umfassend
(A) von 29 bis 89 Gew.-% mindestens eines Polyarylenethersulfons, mit einer mittleren Anzahl an phenolischen Endgruppen pro Kette von 0 bis 0,2,
(B) von 0,5 bis 20 Gew.-% eines thermotropen Polymers
(C) von 0,5 bis 10 Gew.% eines Polyarylenethers mit überwiegend OH-Endgruppen
(D) von 10 bis 70 Gew.% mindestens eines faser- oder teilchenförmigen Füllstoffs
(E) von 0 bis 40 Gew.-% Zusatzstoffen oder Verarbeitungshilfsmittel wobei die Summe der Gewichtsanteile 100 Gew.-% bezogen auf die thermoplastische Formmasse ergibt.

2. Formmasse nach Anspruch 1 wobei das Polyarylenethersulfon A) eine scheinbare Schmelzviskosität bei 350 °C/1150 s⁻¹ von 150 bis 300 Pa s aufweist.

3. Formmasse nach Anspruch 1 oder 2 wobei das thermotrope Polymer (B) eine HDTA-Wärmeformbeständigkeit gemessen nach DIN ISO 75-1 von 140 bis 200 °C aufweist.

4. Formmasse nach mindestens einem der Ansprüche 1 bis 3 wobei das thermotrope Polymer (B) ein Copolyester enthaltend wiederkehrende Einheiten der Strukturen 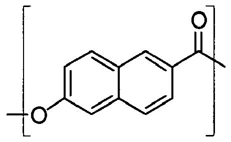 und 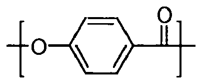 ist.

5. Formmasse nach mindestens einem der Ansprüche 1 bis 4 wobei das thermotrope Polymer aus von 10 bis 90 Mol-% der Einheiten (I) und von von 10 bis 90 Mol-% der Einheiten (II) besteht wobei die Summe der Molanteile 100 Mol-% bezogen auf das thermotrope Polymer ergibt.

6. Formmasse nach mindestens einem der Ansprüche 1 bis 5 wobei als Polyarylenether C) ein Polyethersulfon mit im Mittel mindestens 1,5 phenolischen Endgruppen pro Polymerkette.

7. Formmasse nach mindestens einem der Ansprüche 1 bis 6 wobei das Gewichtsverhältnis der Komponente (A) zu Komponente (C) vorzugsweise bei von 50 zu 1 bis 2 zu 1 liegt.

8. Verwendung der thermoplastischen Formmasse gemäß mindestens einem der Ansprüche 1 bis 7 zur Herstellung von Fasern, Folien oder Formkörpern.

9. Fasern, Folien oder Formkörper enthaltend eine thermoplastische Formmasse gemäß mindestens einem der Ansprüche 1 bis 7.

## Claims

1. A molding composition comprising
(A) from 29 to 89% by weight of at least one polyarylene ether sulfone having an average number of phenolic end groups per chain of from 0 to 0.2,
(B) from 0.5 to 20% by weight of a thermotropic polymer,
(C) from 0.5 to 10% by weight of a polyarylene ether having predominantly OH end groups,
(D) from 10 to 70% by weight of at least one fibrous or particulate filler,
(E) from 0 to 40% by weight of additives or processing aids,
where the total of the proportions by weight is 100% by weight, based on the thermoplastic molding composition.

2. The molding composition according to claim 1, where the apparent melt viscosity of the polyarylene ether sulfone A) for 350°C/1150 s⁻¹ is from 150 to 300 Pa s.

3. The molding composition according to claim 1 or 2, where the HDTA heat deflection temperature according to DIN ISO 75-1 of the thermotropic polymer (B) is from 140 to 200°C.

4. The molding composition according to at least one of claims 1 to 3, where the thermotropic polymer (B) is a copolyester comprising repeat units of the structures 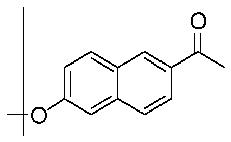 and

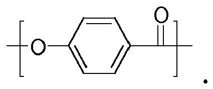

5. The molding composition according to at least one of claims 1 to 4, where the thermotropic polymer is composed of from 10 to 90 mol% of the units (I) and of from 10 to 90 mol% of the units (II), where the total of the molar proportions is 100 mol%, based on the thermotropic polymer.

6. The molding composition according to at least one of claims 1 to 5, where a polyether sulfone having an average of at least 1.5 phenolic end groups per polymer chain is used as polyarylene ether C).

7. The molding composition according to at least one of claims 1 to 6, where the ratio by weight of component (A) to component (C) is preferably from 50:1 to 2:1.

8. The use of the thermoplastic molding composition according to at least one of claims 1 to 7 for producing fibers, foils, or moldings.

9. A fiber, foil, or molding comprising a thermoplastic molding composition according to at least one of claims 1 to 7.

## Revendications

1. Masse de moulage, comprenant
(A) 29 à 89% en poids d'au moins une polyarylène-éthersulfone présentant un nombre moyen de groupes terminaux phénoliques par chaîne de 0 à 0,2,
(B) 0,5 à 20% en poids d'un polymère thermotrope,
(C) 0,5 à 10% en poids d'un polyarylène-éther présentant principalement des groupes terminaux OH,
(D) 10 à 70% en poids d'au moins une charge sous forme de fibres ou de particules,
(E) 0 à 40% en poids d'additifs ou d'adjuvants de transformation,
la somme des proportions pondérales valant 100% en poids par rapport à la masse de moulage thermoplastique.

2. Masse de moulage thermoplastique selon la revendication 1, la polyarylène-éthersulfone A) présentant une viscosité apparente en masse fondue à 350°C/1150 s⁻¹ de 150 à 300 Pa.s.

3. Masse de moulage selon la revendication 1 ou 2, le polymère thermotrope (B) présentant une résistance à la déformation à chaud HDTA, mesurée selon la norme DIN ISO 75-1, de 140 à 200°C.

4. Masse de moulage selon au moins l'une quelconque des revendications 1 à 3, le polymère thermotrope (B) étant un copolyester contenant des unités récurrentes des structures 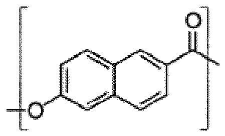 et

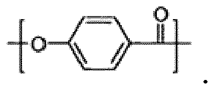

5. Masse de moulage selon au moins l'une quelconque des revendications 1 à 4, le polymère thermotrope étant constitué par 10 à 90% en mole d'unités (I) et 10 à 90% en mole d'unités (II), la somme des proportions molaires valant 100% en mole par rapport au polymère thermotrope.

6. Masse de moulage selon au moins l'une quelconque des revendications 1 à 5, une polyéthersulfone présentant en moyenne au moins 1,5 groupe terminal phénolique par chaîne polymère étant utilisée comme polyarylène-éther C).

7. Masse de moulage selon au moins l'une quelconque des revendications 1 à 6, le rapport pondéral du composant (A) au composant (C) étant de préférence situé dans la plage de 50:1 à 2:1.

8. Utilisation de la masse de moulage thermoplastique selon au moins l'une quelconque des revendications 1 à 7 pour la fabrication de fibres, de feuilles ou de corps moulés.

9. Fibres, feuilles ou corps moulés contenant une masse de moulage thermoplastique selon au moins l'une quelconque des revendications 1 à 7.
